# EUROPÄISCHE PATENTANMELDUNG

(11) **EP 3 828 154 A1**
(43) Veröffentlichungstag der Anmeldung: **02.06.2021**
(21) Anmeldenummer: 19212573.0
(22) Anmeldetag: 29.11.2019
(51) Int. Cl.: C04B 24/32, C04B 28/02, C08G 65/24

(54) **VERZWEIGTE COPOLYMERE ALS ZUSATZMITTEL ZUR VISKOSITÄTSREDUKTION MINERALISCHER**

(71) Anmelder: SIKA TECHNOLOGY AG, 6340 Baar (CH)
(72) Erfinder: Weidmann, Jürg, 8404 Winterthur (CH); Zimmermann, Jörg, 8400 Winterthur (CH); Frunz, Lukas, 8305 Dietlikon (CH)
(74) Vertreter: Sika Patent Attorneys

(57) **Zusammenfassung**

Die Erfindung betrifft die Verwendung verzweigter Copolymere der allgemeinen Struktur (I) als Zusatzmittel zur Erhöhung der Fliessgeschwindigkeit und/oder zur Reduktion der Viskosität mineralischer Bindemittelzusammensetzungen. Ein weiterer Aspekt der Erfindung betrifft mineralische Bindemittelzusammensetzungen enthaltend mindestens ein verzweigtes Copolymer der allgemeinen Struktur (I).

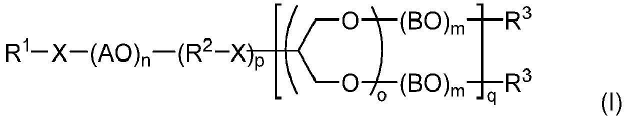

## Beschreibung

### TECHNISCHES GEBIET

Die Erfindung betrifft die Verwendung verzweigter Copolymere als Zusatzmittel zur Erhöhung der Fliessgeschwindigkeit und/oder zur Reduktion der Viskosität einer mineralischen Bindemittelzusammensetzung. Ein weiterer Aspekt der Erfindung betrifft eine mineralische Bindemittelzusammensetzung sowie einen ausgehärteten Formkörper enthaltend das verzweigte Copolymer.

### HINTERGRUND

Dispergiermittel oder Fliessmittel werden in der Bauindustrie als Verflüssiger oder wasserreduzierende Mittel für Bindemittelzusammensetzungen, wie z.B. Beton, Mörtel, Zemente, Gipse und Kalk, eingesetzt. Als Dispergiermittel werden im Allgemeinen organische Polymere eingesetzt, welche dem Anmachwasser zugesetzt oder als Feststoff den Bindemittelzusammensetzungen beigefügt werden. Dadurch können sowohl die Konsistenz der Bindemittelzusammensetzung während der Verarbeitung als auch die Eigenschaften in ausgehärtetem Zustand in vorteilhafter Weise verändert werden.

Die Wahl und Dosierung eines geeigneten Dispergiermittels hängt insbesondere von der spezifischen Zusammensetzung, der Verarbeitungstechnik oder dem Einsatzzweck der Bindemittelzusammensetzung ab. Gerade bei speziellen Bindemittelzusammensetzungen, wie z.B. Spezialbetonen oder Spezialmörteln, stellt dies eine anspruchsvolle Aufgabe dar.

Zu den Spezialbetonen gehören insbesondere Betone, die mit einem niedrigen Verhältnis von Wasser/mineralischem Bindemittel (w/b-Verhältnis) hergestellt werden, also bezogen auf das mineralische Bindemittel wenig Wasser enthalten. Solche Betone sind insbesondere hochfeste Betone (high performance conrete - HPC), ultrahochfeste Betone (ultra high performance conrete - UHPC) und/oder selbstverdichtende Betone (self compacting concrete - SCC).

Ein wesentlicher Vorteil von SCC ist, dass er rasch und entmischungsfrei rein aufgrund der Schwerkraft fliest, Hohlräume selbständig ausfüllt und ohne Aufbringen von Verdichtungsenergie entlüftet. Ein Vibrieren wie bei herkömmlichem Beton ist somit nicht notwendig. Selbstverdichtender Beton ist daher im Besonderen vorteilhaft wenn hohe Einbauleistungen gefragt sind, bei anspruchsvollen geometrischen Formen, bei engmaschiger Bewehrung, bei geringen Bauteilstärken oder in Situationen, in welchen ein Aufbringen von zusätzlicher Verdichtungsenergie nur schwer oder gar nicht möglich ist.

Weitere Vorteile von Betonen mit niedrigem w/b-Verhältnis sind insbesondere ihre geringe Porosität im ausgehärteten Zustand, was eine besonders hohe Festigkeit ermöglicht.

Allerdings zeigen solche Betone mit niedrigem w/b-Verhältnis nach dem Anmachen mit Wasser auch eine unerwünscht hohe Viskosität sowie Klebrigkeit. Herstellung, Handhabung sowie Einbringen von solchen Betonen ist daher häufig besonders zeit- und energieintensiv.

In der Praxis werden üblicherweise Hochleistungsverflüssiger in Form von Polycarboxylatethern (PCE) eingesetzt, um das Fliessverhalten von mineralischen Bindemittelzusammensetzungen zu verbessern. Herkömmliche PCE zeigen normalerweise eine starke Wasserreduktion und verringern die Fliessgrenze von mineralischen Bindemittelzusammensetzungen, allerdings haben sie keinen oder nur geringen Einfluss auf die Viskosität. Darüber hinaus wirken PCE üblicherweise verzögernd auf die Hydratation und damit Festigkeitsentwicklung von mineralischen Bindemitteln.

In der EP 2 986 580 wird daher die Verwendung von speziellen PCE zur Erhöhung der Fliessgeschwindigkeit und/oder zur Reduktion der Viskosität mineralischer Bindemittelzusammensetzungen beschrieben. Die Kammpolymere zeichnen sich durch eine niedrige Molmasse der Seitenkette sowie ein niedriges molares Verhältnis von Seitenketten zu Säuregruppen im Polymerrückgrat aus. Allerdings bewirken diese PCE ebenfalls eine Reduktion des Wasseranspruches von mineralischen Bindemitteln und wirken auf diese verzögernd.

Die WO 2010/112775 beschreibt verzweigte Polyether mit Phosphonsäure-Endgruppen, wobei die Verzweigung durch Einbau einer Stickstoffgruppe in die Polymerstruktur erfolgt. Die beschriebenen Polyether bewirken eine Reduktion der Viskosität von Frischbeton. Nachteilig ist allerdings, dass diese Polyether insbesondere bei Betonen mit niedrigem w/b-Verhältnis üblicherweise hoch dosiert werden müssen und dennoch wenig Einfluss auf die Fliessgrenzen oder das Setzfliessmass haben sowie oft stark verzögernde sowie wasserreduzierende Eigenschaften haben.

Die EP 2 964 586 schliesslich beschreibt Copolymere als Dispergiermittel für mineralische Bindemittel, wobei die Copolymere Einheiten enthalten, die abgeleitet sind aus (i) einer ethylenisch ungesättigten Säure und (ii) einem ethylenisch ungesättigten, verzweigten Polyethermakromonomer. Diese Dispergiermittel haben den Nachteil, dass sie unter Verwendung von Epichlorhydrin hergestellt werden, welches schwer zu handhaben ist. Ausserdem führen diese Copolymere oft zu einem unerwünschten zusätzlichen Lufteintrag sowie ebenfalls zu einer Reduktion des Wasseranspruches des mineralischen Bindemittels.

Es besteht also weiterhin ein Bedarf an Zusatzmitteln für mineralische Bindemittelzusammensetzungen, insbesondere für Betone oder Mörtel mit niedrigem w/b-Verhältnis, die optimale Rheologie und damit Verarbeitungseigenschaften dieser mineralischen Bindemittelzusammensetzungen gewährleisten und die einfach zugänglich sind. Insbesondere besteht ein Bedarf an Zusatzmitteln zur Erhöhung der Fliessgeschwindigkeit und/oder zur Reduktion der Viskosität von mineralischen Bindemittelzusammensetzungen. Dabei wäre es vorteilhaft, wenn diese Zusatzmittel kein oder nur ein sehr geringes Wasserreduktionsvermögen hätten.

### ZUSAMMENFASSUNG DER ERFINDUNG

Aufgabe der vorliegenden Erfindung ist die Bereitstellung von Zusatzmitteln für mineralische Bindemittelzusammensetzungen, insbesondere für Betone oder Mörtel mit niedrigem w/b-Verhältnis, die eine gezielte Erhöhung der Fliessgeschwindigkeit und/oder eine Reduktion der Viskosität von mineralischen Bindemittelzusammensetzungen ermöglichen. Nach Möglichkeit sollen dabei weitere Eigenschaften der mineralischen Bindemittelzusammensetzungen, insbesondere das Ausbreitmass, das Setzmass oder die Fliessgrenze, unverändert bleiben. Bevorzugt soll das Zusatzmittel zudem zusammen mit anderen Zusatzmitteln, insbesondere mit Verflüssigern wie PCE, verwendbar sein.

Es wurde überraschenderweise gefunden, dass diese Aufgabe durch die Verwendung von Copolymeren als Zusatzmittel gemäss Anspruch 1 gelöst werden kann.

Die vorliegende Erfindung betrifft daher die Verwendung von Copolymeren als Zusatzmittel zur Erhöhung der Fliessgeschwindigkeit und/oder zur Reduktion der Viskosität in mineralischen Bindemittelzusammensetzungen, wobei die Copolymere hergestellt werden können in einem mehrstufigen Verfahren umfassend die Schritte
1) optional Umsetzung eines Starters S, ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ = C1 - C18 Alkyl, C2 - C18 Alkylen, C3 - C10 Cycloalkyl, C6 - C30 Aryl, C7 - C30 Aralkyl oder C1 - C18 Carbonyl, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel.

Ein besonderer Vorteil der Verwendung erfindungsgemässer Copolymere als Zusatzmittel in mineralischen Bindemittelzusammensetzungen liegt in der Erhöhung der Fliessgeschwindigkeit beziehungsweise der Reduktion der Viskosität der Zusammensetzungen bei nahezu unverändertem Ausbreitmass, beziehungsweise Setzmass, im Vergleich zu mineralischen Bindemittelzusammensetzungen ohne erfindungsgemässes Copolymer aber ansonsten gleicher Zusammensetzung. Insbesondere kann die Erhöhung der Fliessgeschwindigkeit beziehungsweise die Reduktion der Viskosität bei nahezu unverändertem Ausbreitmass und/oder Setzmass bei mineralischen Bindemittelzusammensetzungen mit einem niedrigen w/b-Verhältnis erreicht werden.

Weitere Vorteile der Verwendung erfindungsgemässer Copolymere als Dispergiermittel in mineralischen Bindemittelzusammensetzungen sind weniger Entmischung bzw. Separation der Bestandteile der mineralischen Bindemittelzusammensetzung, weniger unerwünschter Lufteintrag, sowie kein wesentliches eigenes Wasserreduktionsvermögen der Copolymere. Speziell letzteres ist von Bedeutung, da erfindungsgemässe Copolymere so mit bekannten Wasserreduktionsmitteln, z.B. Superverflüssigern wie Lignosulphonaten, Polynaphtalinsulfonaten, Polymelmaminsulfonaten und/oder Polycarboxylatethern, in bestehenden Rezepturen kombiniert werden können, ohne dass die Dosierung des Wassereduktionsmittels angepasst werden muss.

Schliesslich zeichnen sich erfindungsgemässe Copolymere durch eine einfache Synthese aus, welche bevorzugt ohne die Verwendung von Epichlorhydrin auskommt. Dies ist von Vorteil, da Epichlorhydrin aufgrund seiner Toxizität und Karzinogenität problematisch ist.

Weitere Aspekte der Erfindung sind Gegenstand anderer unabhängiger Ansprüche. Besonders bevorzugte Ausführungsformen der Erfindung sind Gegenstand der abhängigen Ansprüche.

### WEGE ZUR AUSFÜHRUNG DER ERFINDUNG

Ein erster Aspekt der Erfindung betrifft die Verwendung von Copolymeren als Zusatzmittel zur Erhöhung der Fliessgeschwindigkeit und/oder zur Reduktion der Viskosität von mineralischen Bindemittelzusammensetzungen, wobei die Copolymere hergestellt werden in einem mehrstufigen Verfahren, umfassend die Schritte
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ = C1 - C18 Alkyl, C2 - C18 Alkylen, C3 - C10 Cycloalkyl, C6 - C30 Aryl, C7 - C30 Aralkyl oder C1 - C18 Carbonyl, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel.

Insbesondere wird durch die Verwendung eines erfindungsgemässen Copolymers die Fliessgeschwindigkeit der mineralischen Bindemittelzusammensetzung erhöht und/oder ihre Viskosität reduziert. Es ist darüber hinaus besonders vorteilhaft, dass erfindungsgemässe Copolymere nicht oder zumindest nicht wesentlich zur Reduktion des Wasseranspruches der mineralischen Bindemittelzusammensetzung beitragen.

Als Mass für die Reduktion der Viskosität wird vorliegend eine Verringerung der Auslaufzeit bzw. Trichterauslaufzeit gemäss DIN EN 12350-9 und/oder eine Verringerung der Ablaufzeit gemäss JSCE-F 541-1999 gebraucht. Je niedriger also die Auslaufzeit, bzw. Trichterauslaufzeit und/oder die Ablaufzeit, desto niedriger ist die Viskosität einer mineralischen Bindemittelzusammensetzung. Ein weiteres Mass für die Reduktion der Viskosität ist vorliegend eine Erhöhung der Fliessgeschwindigkeit gemessen nach Schweizer Norm SIA 262.238 oder als t₅₀₀ nach Japanischer Norm JIS A1150. Eine erhöhte Fliessgeschwindigkeit bedeutet demnach eine niedrigere Viskosität einer mineralischen Bindemittelzusammensetzung.

Unter dem Begriff Wasseranspruch wird vorliegend die Menge Wasser verstanden, die benötigt wird, um bei einer gegebenen Bindemittelzusammensetzung ein bestimmtes Ausbreitmass, gemessen nach Norm DIN EN 12350-5, einzustellen.

Bei der erfindungsgemäßen Verwendung von Copolymeren als Zusatzmittel zu mineralischen Bindemittelzusammensetzungen, zeigt eine mit Wasser angemachte mineralische Bindemittelzusammensetzung, die diese Copolymere enthält, demnach eine erhöhte Fliessgeschwindigkeit und/oder geringere Viskosität aber keine zusätzliche Erhöhung des Ausbreitmasses, jeweils im Vergleich mit derselben mineralischen Bindemittelzusammensetzung, die mit derselben Wassermenge angemacht wurde, aber kein Copolymer enthält. Das bedeutet, dass die Zusammensetzung nach Zugabe des erfindungsgemässen Copolymeren schneller fliesst und/oder eine geringere Viskosität hat als eine analoge Zusammensetzung, die das Copolymere nicht enthält, oder als eine analoge Zusammensetzung, die ein nicht erfindungsgemässes Copolymer, wie beispielsweise ein Polycarboxylatether (PCE), enthält.

Bevorzugt beeinflusst dass Copolymer bei erfindungsgemässer Verwendung und einer Dosierung von 0.01 - 10 Gew.-%, insbesondere 0.1 - 7 Gew.-% oder 0.2 - 5 Gew.-%, jeweils bezogen auf das Gesamtgewicht an mineralischem Bindemittel, das Ausbreitmass gemäss DIN EN 12350-5 und/oder das Setzmass gemäss DIN EN 12350-2 der mineralischen Bindemittelzusammensetzung um weniger als 15%, insbesondere weniger als 10%, bevorzugt weniger als 5% im Speziellen weniger als 3% oder weniger als 2%. Dies bedeutet, dass das Ausbreitmass und/oder das Setzmass der mineralischen Bindemittelzusammensetzung nach Zugabe von 0.01 - 10 Gew.-%, insbesondere 0.1 - 7 Gew.-% oder 0.2 - 5 Gew.-%, jeweils bezogen auf das Gesamtgewicht an mineralischem Bindemittel, eines erfindungsgemässen Copolymeren um weniger als 15%, insbesondere weniger als 10%, bevorzugt weniger als 5% im Speziellen weniger als 3% oder weniger als 2%, vom Ausbreitmass und/oder Setzmass einer analogen Zusammensetzung, die das erfindungsgemässe Copolymer nicht enthält, abweicht.

Erfindungsgemässe Copolymere können hergestellt werden in einem mehrstufigen Verfahren, umfassend die Schritte
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ = C1 - C18 Alkyl, C2 - C18 Alkylen, C3 - C10 Cycloalkyl, C6 - C30 Aryl, C7 - C30 Aralkyl oder C1 - C18 Carbonyl, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel.

Vorzugsweise werden die einzelnen Schritte des Verfahrens aufeinanderfolgend, ohne Isolierung oder Aufreinigung der Zwischenprodukte durchgeführt.

Die Reaktionsbedingungen der Schritte 1) bis 3) können variieren. So können beispielsweise die Reaktionstemperatur, der Druck, und/oder die Art und Menge an eingesetztem Katalysator der Schritte 1) bis 3) unterschiedlich sein. Im Allgemeinen ist es jedoch bevorzugt, wenn die Reaktionstemperatur, der Druck, sowie die Art und Menge an eingesetztem Katalysator in den Schritten 1) bis 3) dieselben sind.

Die Reaktionstemperatur kann im Bereich zwischen 80 °C - 180 °C, insbesondere 100 °C - 140 °C variieren. Der Druck liegt vorzugsweise im Bereich von 1 - 5 bar, insbesondere im Bereich von 1 - 3 bar.

Die einzelnen Schritte des Verfahrens werden vorzugsweise unter Katalyse durchgeführt. Geeignete Katalysatoren für die Alkoxylierungen der Schritte 1) bis 3) sind dem Fachmann an sich bekannt. In bevorzugten Ausführungsformen werden die Reaktionsschritte 1) bis 3) katalysiert. Es ist insbesondere bevorzugt, denselben Katalysator für die Schritte 1) bis 3) zu nutzen, ohne diesen zwischenzeitlich zu entfernen oder zu deaktivieren. Als besonders geeignete Katalysatoren haben sich Alkalimetallhydroxide und/oder Alkalimetallalkoholate herausgestellt. In einer bevorzugten Ausführungsform wird als Katalysator ein Alkalimetallalkoholat desjenigen Alkohols eingesetzt wird, der auch als Starter **S** verwendet wird. Es kann auch bevorzugt sein, Natriumalkoholate, im Speziellen Natriummethanolat oder Natriumethanolat als Katalysator einzusetzen.

Ein geeignetes Verfahren zur Herstellung von erfindungsgemässen Copolymeren wird beispielsweise in der EP 0 116 978 angegeben.

Der Starter **S** ist vorliegend eine Verbindung ausgewählt aus der Gruppe bestehend aus Alkoholen, Aminen, Carbonsäuren oder Amiden der allgemeinen Formel R¹-XH, wobei R¹ = C1 - C18 Alkyl, C2 - C18 Alkylen, C3 - C10 Cycloalkyl, C6 - C30 Aryl, C7 - C30 Aralkyl oder C1-C18 Carbonyl, X = O oder NH. Es ist besonders bevorzugt, dass der Starter **S** ausser der Gruppe XH keine weiteren nucleophilen Gruppen enthält. Wenn der Starter **S** ein Alkohol ist, so handelt es sich um ein Monool, also um einen Alkohol mit nur einer OH-Gruppe. Wenn der Starter **S** ein Amin ist, so handelt es sich um ein primäres Amin, also um ein Amin mit einer NH₂-Gruppe. Es handelt sich bei dem Starter **S** nicht um ein sekundäres oder tertiäres Amin.

In besonders bevorzugten Ausführungsformen ist der Starter **S** ausgewählt aus der Gruppe bestehend aus Methanol, Ethanol, n-Propanol, i-Propanol, n-Butanol, 2-Butanol, Prenol, Isoprenol, n-Hexanol, cyclo-Hexanol, n-Octanol, 2-Ethylhexanol, Laurylalkohol, Myristylalkohol, Geraniol, Citronellol, Cetylalkohol, Stearylalkohol, Vinylalkohol, Allylalkohol, Methallylalkohol, Palmitoleylalkohol, Oleylalkohol, Linoleylalkohol, Linolenylalkohol, Phenol, Benzylalkohol, 4-Methylbenzylalkohol, Anisylalkohol, Vanillin, Methylamin, Ethylamin, Butylamin, cyclo-Hexylamin, Oleylamin, Anilin, Ameisensäure, Essigsäure, Propionsäure, Buttersäure, Valeriansäure, Isovaleriansäure, Capronsäure, 2-Ethylhexansäure, Caprylsäure, Laurinsäure, Myristinsäure, Palmitinsäure, Stearinsäure, Ölsäure, Linolsäure, Acrylsäure, Methacrylsäure, Benzoesäure, Acrylamid, Methacrylamid.

Alkoxylierungsmittel im Sinne der vorlegenden Erfindung sind Verbindungen, die durch Polymerisation zu Polyethern umgesetzt werden können. Alkoxylierungsmittel bewirken also eine Alkoxylierung, bzw. den Aufbau von Alkylenoxid- bzw. Polyalkylenoxid-Einheiten. Insbesondere enthalten Alkoxylierungsmittel im Sinne der vorliegenden Erfindung Oxiran-, Oxetan- oder Oxolan-Strukturen. Besonders bevorzugte Alkoxylierungsmittel sind Alkylenoxide ausgewählt aus Ethylenoxid, Propylenoxid, 1,2-Butylenoxid, Cyclohexenoxid und/oder Tetrahydrofuran. Im Speziellen ist das Alkoxylierungsmittel Ethylenoxid und/oder Propylenoxid. Es kann bevorzugt sein, nur ein Alkoxylierungsmittel in einem der Schritte 1) bis 3) zu verwenden. In einer ganz bevorzugten Ausführungsform wird nur ein Alkoxylierungsmittel, insbesondere Ethylenoxid, in den Schritten 1) bis 3) verwendet. Es ist aber auch möglich zwei oder mehr Alkoxylierungsmittel in den Schritten 1) bis 3) zu verwenden, entweder als Gemisch oder jeweils einzeln in jeweils einem der Schritte 1) bis 3).

In einer bevorzugten Ausführungsform werden erfindungsgemässe Copolymere ohne die Verwendung von Epichlorhydrin hergestellt. Das Verfahren zur Herstellung ist also Epichlorhydrin-frei. Erfindungsgemässe Copolymere können demzufolge bevorzugt hergestellt werden in einem Verfahren umfassend die Schritte:
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ = C1 - C18 Alkyl, C2 - C18 Alkylen, C3 - C10 Cycloalkyl, C6 - C30 Aryl, C7 - C30 Aralkyl oder C1-C18 Carbonyl, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

In einer besonders bevorzugten Ausführungsform werden erfindungsgemässe Copolymere ohne die Verwendung von Epichlorhydrin und unter Verwendung eines Alkohols als Starter **S** hergestellt. Das Verfahren zur Herstellung ist also Epichlorhydrin-frei. Erfindungsgemässe Copolymere können demzufolge besonders bevorzugt hergestellt werden in einem Verfahren umfassend die Schritte:
1) optional Umsetzung eines Alkohols R¹-OH mit einem Alkoxylierungsmittel und/oder einem halogenierten Alkohol oder halogenierten Amin Hal-R²-XH, wobei R¹= C1 - C18 Alkyl, C2 - C18 Alkylen, C3 - C10 Cycloalkyl, C6 - C30 Aryl, oder C7 - C30 Aralkyl, X = O oder NH, Hal = Cl, Br oder I, und R² = C1 - C16 Alkyl ist,
2) Umsetzung eines Alkohols R¹-OH oder des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

In einer weiteren besonders bevorzugten Ausführungsform werden erfindungsgemässe Copolymere ohne die Verwendung von Epichlorhydrin und unter Verwendung eines Amins als Starter **S** hergestellt. Das Verfahren zur Herstellung ist also Epichlorhydrin-frei. Erfindungsgemässe Copolymere können demzufolge weiterhin besonders bevorzugt hergestellt werden in einem Verfahren umfassend die Schritte:
1) optional Umsetzung eines Amins R¹-NH₂ mit einem Alkoxylierungsmittel und/oder einem halogenierten Alkohol oder halogenierten Amin Hal-R²-XH, wobei R¹= C1 - C18 Alkyl, C2 - C18 Alkylen, C3 - C10 Cycloalkyl, C6 - C30 Aryl, oder C7 - C30 Aralkyl, X = O oder NH, Hal = Cl, Br oder I, und R² = C1 - C16 Alkyl ist,
2) Umsetzung eines Amins R¹-NH₂ oder des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

In einer weiteren besonders bevorzugten Ausführungsform werden erfindungsgemässe Copolymere ohne die Verwendung von Epichlorhydrin und unter Verwendung einer Carbonsäure als Starter **S** hergestellt. Das Verfahren zur Herstellung ist also Epichlorhydrin-frei. Erfindungsgemässe Copolymere können demzufolge weiterhin besonders bevorzugt hergestellt werden in einem Verfahren umfassend die Schritte:
1) optional Umsetzung einer Carbonsäure R¹-OH mit einem Alkoxylierungsmittel und/oder einem halogenierten Alkohol oder halogenierten Amin Hal-R²-XH, wobei R¹= C1 - C18 Carbonyl, X = O oder NH, Hal = Cl, Br oder I, und R² = C1 - C16 Alkyl ist,
2) Umsetzung einer Carbonsäure R¹-OH oder des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

In einer ganz besonders bevorzugten Ausführungsform werden erfindungsgemässe Copolymere ohne die Verwendung von Epichlorhydrin und unter Verwendung eines Alkohols als Starter **S** hergestellt, wobei der Starter-Akohol zunächst mit einem Alkoxylierungsmittel umgesetzt wird. Das Verfahren zur Herstellung ist also Epichlorhydrin-frei. Erfindungsgemässe Copolymere können demzufolge ganz besonders bevorzugt hergestellt werden in einem Verfahren umfassend die Schritte:
1) Umsetzung eines Alkohols R¹-OH mit einem Alkoxylierungsmittel, wobei R¹= C1 - C18 Alkyl, C2 - C18 Alkylen, C3 - C10 Cycloalkyl, C6 - C30 Aryl, oder C7 - C30 Aralkyl,
2) Umsetzung des Reaktionsproduktes aus Schritt 1) mit Glycidol oder einer Mischung aus Glycidol und einem Alkoxylierungsmittel,
3) optional Umsetzung des Reaktionsproduktes aus Schritt 2) mit einem Alkoxylierungsmittel.

Dabei ist es insbeosndere bevorzugt, wenn das Verfahren zur Herstellung erfindungsgemässer Copolymere einen Schritt 3) wie vorstehend beschrieben enthält.

Erfindungsgemässe Copolymere, erhältlich in einem Verfahren wie oben beschreiben, können demnach Copolymere der allgemeinen Struktur (I) sein: 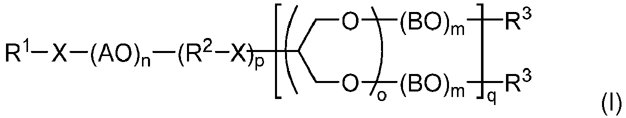
wobei R¹ = C1-C18 Alkyl, C2-C18 Alkylen, C3-C10 Cycloalkyl, C6-C30 Aryl oder C7-C30 Aralkyl oder C1-C18 Carbonyl, bevorzugt Methyl, Ethyl, Vinyl, Allyl, Methallyl, Isoprenyl, Cyclohexyl, Phenyl, Acryloyl oder Methacryloyl ist,
X = O oder NH ist,
A jeweils unabhängig voneinander C1-C10 Alkylen, bevorzugt Ethylen, Propylen und/oder Butylen sind,
R² = C1-C16 Alkyl ist,
B jeweils unabhängig voneinander C1-C10 Alkylen, bevorzugt Ethylen, Propylen und/oder Butylen sind,
R³ = H, C1-C16 Alkyl, oder C(O)R¹, mit R¹ wie oben definiert, bevorzugt H ist,
m jeweils unabhängig voneinander eine ganze Zahl im Bereich von 0 - 350 sind,
n eine ganze Zahl im Bereich von 0 - 100 ist,
p gleich 0 oder 1 ist,
q eine ganze Zahl im Bereich von 1 - 10 ist, und
falls q = 1 ist, o eine ganze Zahl im Bereich von 1 - 50 ist, und falls q > 1 ist, alle o jeweils unabhängig voneinander eine ganze Zahl im Bereich von 1 - 50 darstellen.

Es ist besonders bevorzugt, dass p = 0 ist, wenn n > 0 ist.

Die Anzahl linearer Struktureinheiten (BO)ₘ in der allgemein Struktur (I) ist abhängig von o und q. Die Anzahl der Struktureinheiten (BO)ₘ ist gleich o x q +1. Zur besseren Verdeutlichung werden im Folgenden einige Beispielstrukturen abgeleitet aus der allgemeinen Formel (I) mit definierten Kombinationen von o und q dargestellt. Diese Beispielstrukturen sollen in keiner Weise als einschränkend für die erfindungsgemässen Copolymere gelten.

Für den Fall o = 2 und q = 1 ergeben sich Copolymer der folgenden allgemeinen Struktur (la)

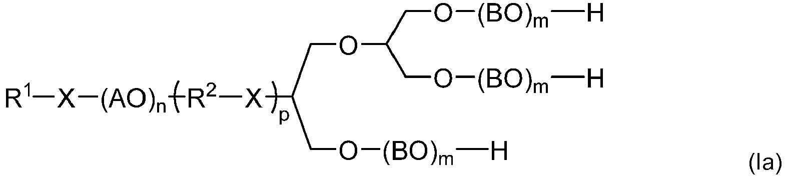

Für den Fall o = 3 und q = 1 ergeben sich Copolymer der folgenden allgemeinen Struktur (Ib)

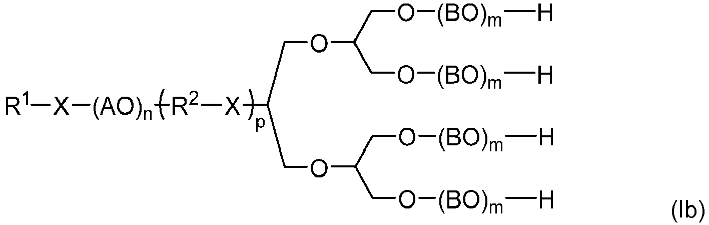

Für den Fall o = 1 und q = 2 ergeben sich Copolymer der folgenden allgemeinen Struktur (Ic)

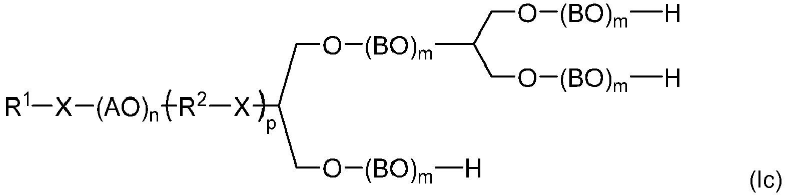

Für den Fall o = 2 und q = 3 ergeben sich Copolymer der folgenden allgemeinen Struktur (Id)

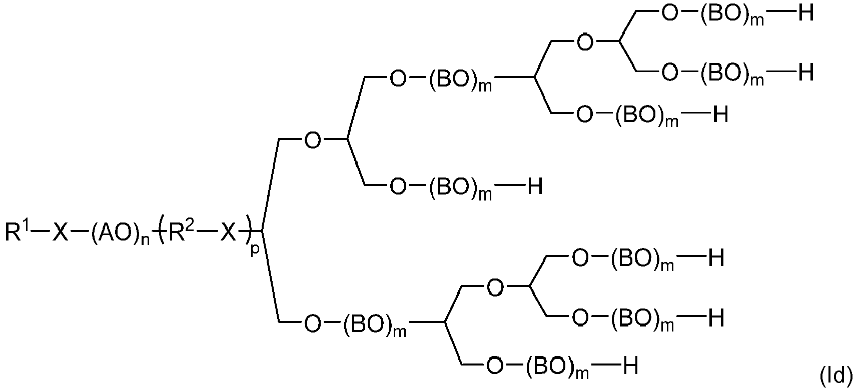

Dem Fachmann ist klar, dass bei der Umsetzung gemäss Schritt 2) des erfindungsgemässen Verfahrens zur Herstellung von Copolymeren unterschiedliche Regioisomere entstehen können. Dabei handelt es sich um Regioisomere, die entstehen wenn der Oxiran-Ring des Glycidols über die verschiedenen C-Atome, gemäss einer der chemischen Reaktionsgleichungen a) bzw. b) wie im Folgenden dargestellt geöffnet wird.

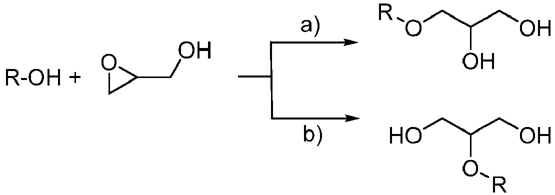

Zur Vereinfachung wird in der vorliegenden Erfindung stets nur das Regioisomer b) abgebildet. Gemeint sind aber stets beide Regioisomere a) und b) bzw. deren Gemische.

Bevorzugte erfindungsgemässe Copolymere sind Copolymere der allgemeine Struktur (I), bei denen
R¹ ausgewählt ist aus C1-C18 Alkyl, besonders bevorzugt aus Methyl oder Ethyl,
X = O ist,
A jeweils unabhängig voneinander Ethylen, Propylen und/oder Butylen, besonders bevorzugt Ethylen sind,
B jeweils unabhängig voneinander Ethylen, Propylen und/oder Butylen, besonders bevorzugt Ethylen sind,
R³ gleich H ist,
m jeweils unabhängig voneinander eine ganze Zahl im Bereich von 0 - 350, besonders bevorzugt 2 - 200, ganz besonders bevorzugt 5 - 150, im Speziellen 7 - 30 sind,
n eine ganze Zahl im Bereich von 1 - 100, besonders bevorzugt 2 - 75, ganz besonders bevorzugt 5 - 55 ist,
p = 0 ist,
q eine ganze Zahl im Bereich von 1 - 10, besonders bevorzugt 2 - 8, ganz besonders bevorzugt 4 - 7 ist, und
o eine ganze Zahl im Bereich von 1 - 50, besonders bevorzugt 3 - 40, ganz besonders bevorzugt 6 - 30, im Speziellen 8 - 20 ist.

Die Anzahl linearer Struktureinheiten (BO)ₘ in der allgemein Struktur (I) ist abhängig von o und q. Die Anzahl der Struktureinheiten (BO)ₘ ist gleich o x q +1.

Die Strukturelemente (AO) sowie (BO) der allgemeinen Struktur (I) sind Polyalkylenoxidketten. Bevorzugt beträgt ein Anteil an Ethylenoxideinheiten in den Polyalkylenoxidetten, bezogen auf sämtliche vorhandenen Alkylenoxideinheiten, mehr als 90 Mol-%, insbesondere mehr als 95 Mol-%, bevorzugt mehr als 98 Mol-%, im Speziellen 100 Mol-%. In einer besonderen Ausführungsform weisen die Polyalkylenoxidketten keine hydrophoben Gruppen, insbesondere keine Alkylenoxide mit drei oder mehr Kohlenstoffatomen, auf. Ein hoher Anteil an Ethylenoxideinheiten oder ein geringer Gehalt an Alkylenoxiden mit drei oder mehr Kohlenstoffatomen reduziert die Gefahr von unerwünschtem Lufteintrag.

Das durchschnittliche gewichtsgemittelte Molekulargewicht (Mw) wird vorliegend durch Gel-Permeations-Chromatographie (GPC) mit Polyethylenglycol (PEG) als Standard bestimmt. Diese Technik ist dem Fachmann an sich bekannt. Erfindungsgemässe

Copolymere können eine Molmasse M_{w} im Bereich von 200 - 40'000 g/mol haben. Bei bevorzugten Copolymeren sind die Parameter n, m, o und p der allgemeinen Struktur (I) so gewählt, dass die mittlere Molmasse M_{w} der Copolymere im Bereich von 200 - 75'000, bevorzugt 500 - 50'000, besonders bevorzugt 1'000 - 35'000, ganz besonders bevorzugt 1'500 - 25'000, insbesondere 2'000 - 15'000 liegt.

Besonders bevorzugt sind Copolymere der allgemeinen Struktur (I), bei denen R¹ eine Methyl- oder Ethyl-Einheit ist.

In einer bevorzugten Ausführungsform sind erfindungsgemässe Copolymere solche Copolymere der allgemeine Struktur (I), bei denen p = 0 ist, falls n > 0 ist und bei denen p = 1 ist, falls n = 0 ist. In dieser Ausführungsform ist in den Copolymeren also jeweils entweder eine (AO)ₘ-Einheit oder eine Einheit R²-X vorhanden.

Gemäss einer weiteren bevorzugten Ausführungsform sind alle m so gewählt, dass die mittlere Anzahl (BO)-Einheiten an allen o x q +1 linearen Strukturen jeweils gleich ist.

Entsprechend einer bevorzugten Ausführungsform sind erfindungsgemässe Copolymere solche Copolymere der allgemeine Struktur (I), bei denen
R¹ ausgewählt ist aus C1-C18 Alkyl, besonders bevorzugt aus Methyl oder Ethyl,
X = O ist,
A jeweils unabhängig voneinander Ethylen, Propylen und/oder Butylen, besonders bevorzugt Ethylen sind,
B jeweils unabhängig voneinander Ethylen, Propylen und/oder Butylen, besonders bevorzugt Ethylen sind,
R³ gleich H ist,
m jeweils unabhängig voneinander eine ganze Zahl im Bereich von 0 - 350, besonders bevorzugt 2 - 200, ganz besonders bevorzugt 5 - 150, im Speziellen 7 - 30 ist,
n eine ganze Zahl im Bereich von 1 - 100, besonders bevorzugt 2 - 75, ganz besonders bevorzugt 5 - 55 ist,
p = 0 ist, und
o eine ganze Zahl im Bereich von 1 - 50, besonders bevorzugt 3 - 40, ganz besonders bevorzugt 6 - 30, im Speziellen 8 - 20, und q = 1 ist. Solche Copolymere entsprechen der allgemeinen Struktur (II)

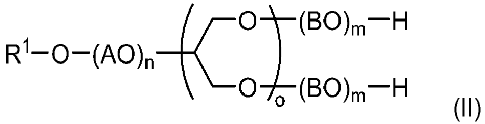

Copolymere der allgemeinen Struktur (II) können hergestellt werden in einem Verfahren umfassend die Schritte
1) Umsetzung eines Alkohols R¹-OH mit einem Alkoxylierungsmittel, bevorzugt Ethylenoxid, wobei R¹= C1 - C18 Alkyl, bevorzugt Methyl oder Ethyl ist,
2) Umsetzung des Reaktionsproduktes aus Schritt 1) mit Glycidol,
3) Umsetzung des Reaktionsproduktes aus Schritt 2) mit einem Alkoxylierungsmittel, bevorzugt Ethylenoxid.

Entsprechend einer weiteren bevorzugten Ausführungsform sind erfindungsgemässe Copolymere solche Copolymere der allgemeinen Struktur (I), bei denen
R¹ ausgewählt ist aus C1-C18 Alkyl, besonders bevorzugt aus Methyl oder Ethyl,
X = O ist,
A jeweils unabhängig voneinander Ethylen, Propylen und/oder Butylen, besonders bevorzugt Ethylen sind,
B jeweils unabhängig voneinander Ethylen, Propylen und/oder Butylen, besonders bevorzugt Ethylen sind,
R³ gleich H ist,
m jeweils unabhängig voneinander eine ganze Zahl im Bereich von 0 - 350, besonders bevorzugt 2 - 200, ganz besonders bevorzugt 5 - 150, im Speziellen 7 - 30 sind,
n eine ganze Zahl im Bereich von 1 - 100, besonders bevorzugt 2 - 75, ganz besonders bevorzugt 5 - 55 ist,
p = 0 ist, und
o eine ganze Zahl im Bereich von 1 - 50, besonders bevorzugt 3 - 40, ganz besonders bevorzugt 6 - 30, im Speziellen 8 - 20, und q mindestens 2 ist. Solche Copolymere entsprechen der allgemeinen Struktur (III) 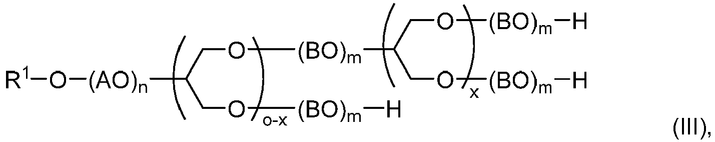 wobei x eine ganze Zahl von 1-9 ist, mit der Massgabe, dass x < o.

Copolymere der allgemeinen Struktur (III) können hergestellt werden in einem Verfahren umfassend die Schritte
1) Umsetzung eines Alkohols R¹-OH mit einem Alkoxylierungsmittel, bevorzugt Ethylenoxid, wobei R¹= C1 - C18 Alkyl, bevorzugt Methyl oder Ethyl ist,
2) Umsetzung des Reaktionsproduktes aus Schritt 1) mit einer Mischung aus Glycidol und einem Alkoxylierungsmittel, bevorzugt Ethylenoxid,
3) Umsetzung des Reaktionsproduktes aus Schritt 2) mit einem Alkoxylierungsmittel, bevorzugt Ethylenoxid.

Entsprechend einer weiteren bevorzugten Ausführungsform sind erfindungsgemässe Copolymere solche Copolymere der allgemeinen Struktur (I), bei denen
R¹ ausgewählt ist aus C2-C18 Alkenyl, besonders bevorzugt aus Vinyl, Allyl, Methallyl, oder Isoprenyl, insbesondere Vinyl,
X = O ist,
B jeweils unabhängig voneinander Ethylen, Propylen und/oder Butylen, besonders bevorzugt Ethylen sind,
R2 gleich C1-C16 Alkyl, besonders bevorzugt C2-C4 Alkyl, insbesondere Butyl ist,
R³ gleich H ist,
m jeweils unabhängig voneinander eine ganze Zahl im Bereich von 0 - 350, besonders bevorzugt 2 - 200, ganz besonders bevorzugt 5 - 150, im Speziellen 7 - 30 sind,
n = 0 ist,
p = 1 ist, und
o eine ganze Zahl im Bereich von 1 - 50, besonders bevorzugt 3 - 40, ganz besonders bevorzugt 6 - 30, im Speziellen 8 - 20, und q mindestens 2 ist. Solche Copolymere entsprechen der allgemeinen Struktur (IV)

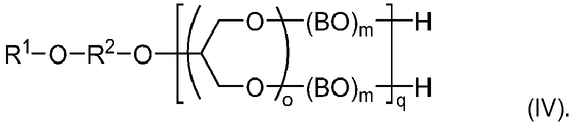

Copolymere der allgemeinen Struktur (IV) können hergestellt werden in einem Verfahren umfassend die Schritte
1) Umsetzung eines Alkohols R¹-OH mit einem halogenierten Alkohol Hal-R²-XH, wobei R¹= C2-C18 Alkenyl ist, R2 gleich C1-C16 Alkyl, Hal gleich Cl, Br oder I ist und X gleich O ist,
2) Umsetzung des Reaktionsproduktes aus Schritt 1) mit Glycidol,
3) Umsetzung des Reaktionsproduktes aus Schritt 2) mit einem Alkoxylierungsmittel, bevorzugt Ethylenoxid.

Entsprechend einer weiteren bevorzugten Ausführungsform sind erfindungsgemässe Copolymere solche Copolymere der allgemeinen Struktur (I), bei denen
R¹ ausgewählt ist aus C1-C18 Alkyl, besonders bevorzugt aus Methyl oder Ethyl,
X = O ist,
B jeweils unabhängig voneinander Ethylen, Propylen und/oder Butylen, besonders bevorzugt Ethylen sind,
R² gleich C1-C16 Alkyl, besonders bevorzugt C2-C4 Alkyl, insbesondere Butyl ist,
R³ gleich H ist,
m jeweils unabhängig voneinander eine ganze Zahl im Bereich von 0 - 350, besonders bevorzugt 2 - 200, ganz besonders bevorzugt 5 - 150, im Speziellen 7 - 30 ist,
n = 0 ist,
p = 0 ist,
q eine ganze Zahl im Bereich von 1 - 10 ist, und
o jeweils unabhängig voneinander eine ganze Zahl im Bereich von 1 - 50, besonders bevorzugt 3 - 40, ganz besonders bevorzugt 6 - 30, im Speziellen 8 - 20 sind. Solche Copolymere entsprechen der allgemeinen Struktur (V)

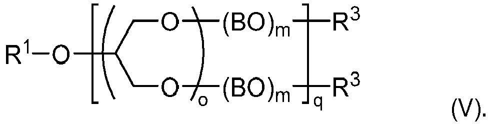

Copolymere der allgemeinen Struktur (V) können hergestellt werden in einem Verfahren umfassend die Schritte
1) Umsetzung eines Alkohols R¹-OH mit Glycidol,
2) Umsetzung des Reaktionsproduktes aus Schritt 1) mit einem Alkoxylierungsmittel, bevorzugt Ethylenoxid.

Entsprechend einer ganz besonders bevorzugten Ausführungsform sind erfindungsgemässe Copolymere solche Copolymere der allgemeinen Struktur (I), bei denen
R¹ ausgewählt ist aus Methyl,
X = O ist,
A Ethylen ist,
B Ethylen ist,
R³ gleich H ist,
m jeweils unabhängig voneinander eine ganze Zahl im Bereich von 5 - 20 ist,
n = 5 ist,
p = 0 ist,
o = eine ganze Zahl im Bereich von 3 - 10 ist, und
q = 1 ist.

Solche Copolymere entsprechen der allgemeinen Struktur (VI)

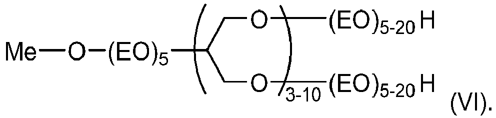

Copolymere der allgemeinen Struktur (VI) können hergestellt werden in einem Verfahren umfassend die Schritte
1) Umsetzung von Methanol mit Ethylenoxid,
2) Umsetzung des Reaktionsproduktes aus Schritt 1) mit Glycidol,
3) Umsetzung des Reaktionsproduktes aus Schritt 3) mit Ethylenoxid.

Die mineralische Bindemittelzusammensetzung ist insbesondere eine verarbeitbare und/oder wässrige mineralische Bindemittelzusammensetzung.

Die mineralische Bindemittelzusammensetzung enthält zumindest ein mineralisches Bindemittel. Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weisskalk) sein.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%. Insbesondere ist der Zement vom Typ CEM I, CEM II und/oder CEM III, CEM IV oder CEM V (gemäss Norm EN 197-1).

Die mineralische Bindemittelzusammensetzung umfasst mindestens ein hydraulisches Bindemittel, bevorzugt Zement, in wenigstens 5 Gew.-%, bevorzugt in wenigstens 20 Gew.-%, besonders bevorzugt in wenigstens 35 Gew.-%, ganz besonders bevorzugt in wenigstens 65 Gew.-%, im Speziellen ≥ 95 Gew.-%, jeweils bezogen auf die Trockenmasse der mineralischen Bindemittelzusammensetzung.

Es kann aber auch vorteilhaft sein, wenn das mineralische Bindemittel oder die mineralische Bindemittelzusammensetzung andere Bindemittel enthält oder im Wesentlichen daraus besteht. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalkstein, Quarzmehle und/oder Pigmente enthalten. In einer vorteilhaften Ausführungsform enthält das mineralische Bindemittel 5 - 95 Gew.-%, insbesondere 5 - 65 Gew.-%, besonders bevorzugt 15 - 35 Gew.-%, jeweils bezogen auf das Gesamtgewicht des Bindemittels, latenthydraulische und/oder puzzolanische Bindemittel. Vorteilhafte latenthydraulische und/oder puzzolanische Bindemittel sind Schlacke und/oder Flugasche.

In einer besonders bevorzugten Ausführungsform enthält das mineralische Bindemittel ein hydraulisches Bindemittel, insbesondere Zement oder Zementklinker, und ein latenthydraulisches und/oder puzzolanisches Bindemittel, bevorzugt Schlacke und/oder Flugasche. Der Anteil des latenthydraulischen und/oder puzzolanischen Bindemittels beträgt dabei besonders bevorzugt 5 - 65 Gew.-%, besonders bevorzugt 15 - 35 Gew.-%, während wenigstens 35 Gew.-%, im Speziellen wenigstens 65 Gew.-%, des hydraulischen Bindemittels vorliegen.

Bei der mineralischen Bindemittelzusammensetzung handelt es sich bevorzugt um eine Mörtel- oder Betonzusammensetzung, insbesondere um Mörtel- oder Betonzusammesnetzungenmit einem niedrigen Gewichtsverhältnis von Wasser zu Bindemittel (w/b-Verhältnis). Im Speziellen handelt es sich um hochfesten Beton (HPC), ultrahochfesten Beton (UHPC) oder selbstverdichtenden Beton (SCC). Die mineralische Bindemittelzusammensetzung ist insbesondere eine verarbeitbare und/oder mit Wasser angemachte mineralische Bindemittelzusammensetzung.

In einer ganz besonders bevorzugten Ausführungsform umfasst die mineralische Bindemittelzusammensetzung demnach Wasser. Ein Gewichtsverhältnis von Wasser zu Bindemittel in der mineralischen Bindemittelzusammensetzung (w/b-Verhältnis) liegt bevorzugt im Bereich von 0.18 - 0.6, besonders bevorzugt 0.2 - 0.5, ganz besonders bevorzugt 0.22 - 0.4, insbesondere 0.22 - 0.37 im Speziellen 0.22 - 0.28 oder 0.32 - 0.37.

Das erfindungsgemässe Copolymer ist mit Vorteil in einer Menge von 0.01 - 10 Gew.-%, insbesondere 0.1 - 7 Gew.-% oder 0.2 - 5 Gew.-%, jeweils bezogen auf das Gesamtgewicht an mineralischem Bindemittel, vorhanden.

In einer bevorzugten Ausführungsform enthält die mineralische Bindemittelzusammensetzung Mehlkorn, bevorzugt mit einem Anteil > 250 kg/m³, insbesondere 350 - 600 kg/m³. Ein Zementgehalt beträgt dabei insbesondere zwischen 200 - 800 kg/m³, bevorzugt 320 - 500 kg/m³.

Das Mehlkorn beinhaltet dabei insbesondere Flugasche, Metakaolin, Silicastaub und/oder inertes Gesteinsmehl.

Insbesondere ist das Mehlkorn zementfein. Insbesondere liegt ein Grösstkorndurchmesser des Mehhlkorns, z.B. gemessen durch Lasergranulometrie, unterhalb 0.125 mm.

Bevorzugt weist das Mehlkorn eine Blaine-Feinheit von wenigstens 1'000 cm²/g, insbesondere wenigstens 1'500 cm²/g, bevorzugt wenigstens 2'500 cm²/g, noch weiter bevorzugt wenigstens 3'500 cm²/g oder wenigsten 5'000 cm²/g, auf.

Erfindungsgemässe Copolymere haben kein oder nur geringes Wasserreduktionsvermögen. Dies ist vorteilhaft, da sie deshalb in an sich bekannten mineralischen Bindemittelzusammensetzungen, die wasserreduzierende Substanzen wie beispielsweise Superverflüssiger enthalten, zur Reduktion der Viskosität eingesetzt werden können, ohne dass die Menge an Superverflüssiger oder Wasser angepasst werden müsste.

In einer weiteren bevorzugten Ausführungsform enthält die mineralische Bindemittelzusammensetzung daher weiterhin mindestens einen Superverflüssiger ausgewählt aus der Gruppe der Lignosulphonate, Polynaphtalinsulfonate, Polymelmaminsulfonate und/oder Polycarboxylatether, insbesondere mindestens einen Polycarboxylatether.

Polycarboxylatether sind Kammpolymere mit einem Polycarboxyl-Grundgerüst und Polyalkylenoxid-Seitenketten.

Bevorzugte Polycarboxylatether umfassen Struktureinheiten der Formel VII und Struktureinheiten der Formel VIII, 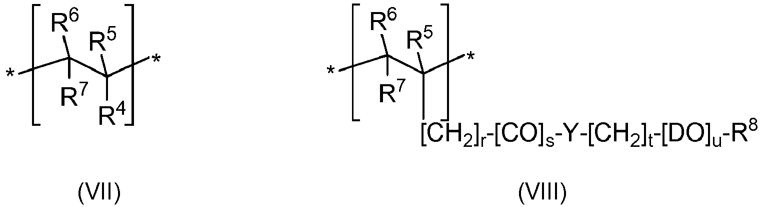 wobei
R⁴, jeweils unabhängig voneinander -COOM, -SO₂-OM, -O-PO(OM)₂ und/oder-PO(OM)₂, bevorzugt -COOM, ist,
R⁵, jeweils unabhängig voneinander H, -CH₂-COOM oder eine Alkylgruppe mit 1 bis 5 Kohlenstoffatomen, bevorzugt H oder -CH₃, sind,
R⁶, jeweils unabhängig voneinander H oder eine Alkylgruppe mit 1 bis 5 Kohlenstoffatomen, bevorzugt H, sind,
R⁷, jeweils unabhängig voneinander H, -COOM oder eine Alkylgruppe mit 1 bis 5 Kohlenstoffatomen, bevorzugt H, sind,
oder R⁴ und R⁷ einen Ring zu -CO-O-CO- (Anhydrid) formen,
M, jeweils unabhängig voneinander H⁺, ein Alkalimetallion, ein Erdalkalimetallion, ein di- oder trivalentes Metallion, eine Ammoniumgruppe oder ein organisches Ammonium, bevorzugt ein H⁺ oder ein Alkalimetallion, ist,
r = 0, 1 oder 2,
s = 0 oder 1,
t = 0, oder eine ganze Zahl von 1 bis 4,
u = 2 - 250, insbesondere 10 - 200,
Y, jeweils unabhängig voneinander -O- oder -NH- ist,
R⁸, jeweils unabhängig voneinander H, eine C₁- bis C₂₀-Alkylgruppe,-Cyclohexylgruppe oder -Alkylarylgruppe ist, und
D = C₂- bis C₄-Alkylen, bevorzugt Ethylen ist.

Bevorzugt ist das molare Verhältnis von Struktureinheit VII zu Struktureinheit VIII 0.7 - 10 : 1, mehr bevorzugt 1 - 8 : 1, insbesondere 1.5 - 5 : 1.

Es kann auch vorteilhaft sein, wenn der Polycarboxylatether zusätzlich noch eine Struktureinheit IX umfasst. Bevorzugt ist Struktureinheit IX abgeleitet von Monomeren ausgewählt aus der Gruppe bestehend aus Alkyl- oder Hydroxyalkylestern der Acrylsäure- oder Methacrylsäure, Vinylacetat, Styrol und N-Vinylpyrrolidon.

Bevorzugt enthält der Polycarboxylatether Carbonsäuregruppen und/oder deren Salze und Polyethylenglykol-Seitenketten.

Bevorzugt ist der Polycarboxylatether aus Struktureinheiten VII, die abgeleitet von ethylenisch ungesättigten Carbonsäuren, insbesondere ungesättigten Monocarbonsäuren, oder deren Salzen sind, und Struktureinheiten VIII, die abgeleitet von ethylenisch ungesättigten Polyalkylenglykolen, insbesondere Polyethylenglykolen, sind, aufgebaut. Insbesondere enthält der Polycarboxylatether ausser Struktureinheiten VII und Struktureinheiten VIII keine weiteren Struktureinheiten.

Superverflüssiger, insbesondere Polycarboxylatether, können in mineralischen Bindemittelzusammensetzungen in 0 - 10 Gew.-%, vorzugsweise 0,1 - 8 Gew.-%, insbesondere 0,25 - 7 Gew.-%, berechnet als Trockengewicht des Superverflüssigers, bezogen auf das Gesamtgewicht der Bindemittelzusammensetzungen, zugesetzt werden.

In einem weiteren Aspekt bezieht sich daher die Erfindung auf die Verwendung eines erfindungsgemässen Copolymeren in einer mineralischen Bindemittelzusammensetzung, die einen Superverflüssiger ausgewählt aus der Gruppe der Lignosulphonate, Polynaphtalinsulfonate, Polymelmaminsulfonate und/oder Polycarboxylatether, insbesondere mindestens einen Polycarboxylatether, enthält.

Es ist möglich, ein erfindungsgemässes Copolymer als solches zu einer mineralischen Bindemittelzusammensetzung zu geben. Es ist aber auch möglich, ein erfindungsgemässes Copolymer als wässrige Lösung oder Emulsion in Wasser zu einer mineralischen Bindemittelzusammensetzung zu geben. Weiter ist es möglich, ein erfindungsgemässes Copolymer in einem Zusatzmittel, insbesondere einem wässrigen Zusatzmittel, zu lösen oder zu dispergieren.

Ein weiterer Aspekt der vorliegenden Erfindung ist daher ein Zusatzmittel umfassend mindestens ein Copolymer hergestellt in einem mehrstufigen Verfahren, umfassend die Schritte
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ = C1 - C18 Alkyl, C2 - C18 Alkylen, C3 - C10 Cycloalkyl, C6 - C30 Aryl, C7 - C30 Aralkyl oder C1-C18 Carbonyl, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel.

Zusätzlich kann das Zusatzmittel mindestens einen Polycarboxylatether und/oder Wasser umfassen. Das Zusatzmittel kann als Dispergiermittel für mineralische Bindemittel eingesetzt werden, wobei gleichzeitig eine Reduktion der Viskosität und eine Reduktion des Wasseranspruches erreicht werden kann.

Bevorzugt liegt das Gewichts-Verhältnis von erfindungsgemässem Copolymer zu Polycarboxylatether in einem wässrigen Zusatzmittel im Bereich zwischen 0.05:5 - 1:1, bevorzugt 0.1:3 - 1:1, besonders bevorzugt 0.1:3 - 1:3.

In einem weiteren Aspekt bezieht sich die Erfindung auf eine Zusammensetzung, insbesondere eine Mörtelzusammensetzung, eine Betonzusammensetzung oder eine zementöse Zusammensetzung, enthaltend mindestens ein wie vorstehend beschriebenes Copolymer sowie ein mineralisches Bindemittel. Das mineralische Bindemittel ist vorzugsweise ein hydraulisches Bindemittel, insbesondere Zement, bevorzugt Portlandzement.

Die Zusammensetzung ist insbesondere ein hochfester Beton, ultrahochfester Beton oder selbstverdichtender Beton.

Das Copolymer verfügt dabei mit Vorteil über einem Anteil von 0.01 - 10 Gew.-%, insbesondere 0.1 - 7 Gew.-% oder 0.2 - 5 Gew.-%, bezogen auf das Gewicht des mineralischen Bindemittels.

Insbesondere enthält die Zusammensetzung Mehlkorn, bevorzugt mit einem Anteil >350 kg/m³, insbesondere 400 - 600 kg/m³. Ein Zementgehalt beträgt dabei insbesondere zwischen 320 und 380 kg/m³.

Ein weiterer Aspekt betrifft ein Verfahren zur Kontrolle der Rheologie von mineralischen Bindemittelzusammensetzungen, insbesondere von HPC, UHPC oder SCC, dadurch gekennzeichnet dass mindestens ein erfindungsgemässes Copolymer der Trockenmischung der mineralischen Bindemittelzusammensetzung beigegeben wird und/oder der mineralischen Bindemittelzusammensetzung zusammen mit dem Anmachwasser, insbesondere als wässrige Lösung oder Emulsion im Anmachwasser, zugegeben wird, und/oder der mineralischen Bindemittelzusammensetzung kurz nach Zugabe des Anmachwassers zugegeben wird. Unter Kontrolle der Rheologie wird vorliegend verstanden, dass durch Zugabe eines erfindungsgemässen Copolymeren die Viskosität, gemessen insbesondere als Trichterauslaufzeit gemäss DIN EN 12350-9 und/oder Ablaufzeit gemäss JSCE-F 541-1999, der jeweiligen mineralischen Bindemittelzusammensetzung erniedrigt wird, bzw. die Fliessfähigkeit erhöht wird, und wobei das Ausbreitmass, gemessen gemäss DIN EN 12350-5, und/oder das Setzmass, gemessen gemäss DIN EN 12350-2, nicht wesentlich geändert wird. Unter "Trockenmischung" wird eine mineralische Bindemittelzusammensetzung verstanden, die alle Komponenten der mineralischen Bindemittelzusammensetzung ausser Wasser enthält.

Insbesondere verringert sich bei einem erfindungsgemässen Verfahren zur Kontrolle der Rheologie von mineralischen Bindemittelzusammensetzungen, insbesondere von HPC, UHPC oder SCC, bei einer Dosierung eines erfindungsgemässen Copolymeren von 0.01 - 10 Gew.-%, insbesondere 0.1 - 7 Gew.-% oder 0.2 - 5 Gew.-%, jeweils bezogen auf das Gesamtgewicht des mineralischen Bindemittels, die Trichterauslaufzeit gemäss DIN EN 12350-9 um mindestens 5%, bevorzugt mindestens 10%, besonders bevorzugt mindestens 15% und/oder die Ablaufzeit gemäss JSCE-F 541-1999 der mineralischen Bindemittelzusammensetzung um mindestens 10%, bevorzugt mindestens 15%, besonders bevorzugt mindestens 25%, insbesondere mindestens 30% im Vergleich zu Trichterauslaufzeit und/oder Ablaufzeit einer analogen Zusammensetzung, die das erfindungsgemässe Copolymer nicht enthält.

Darüber hinaus ändert sich bei einem erfindungsgemässen Verfahren zur Kontrolle der Rheologie von mineralischen Bindemittelzusammensetzungen, insbesondere von HPC, UHPC oder SCC, bei einer Dosierung eines erfindungsgemässen Copolymeren von 0.01 - 10 Gew.-%, insbesondere 0.1 - 7 Gew.-% oder 0.2 - 5 Gew.-%, jeweils bezogen auf das Gesamtgewicht des mineralischen Bindemittels, das Ausbreitmass gemäss DIN EN 12350-5 und/oder das Setzmass gemäss DIN EN 12350-2 der mineralischen Bindemittelzusammensetzung um weniger als 15%, insbesondere weniger als 10%, bevorzugt weniger als 5% im Speziellen weniger als 3% oder weniger als 2% im Vergleich zu Ausbreitmass und/oder Setzmass einer analogen Zusammensetzung, die das erfindungsgemässe Copolymer nicht enthält.

Ein weiterer Aspekt betrifft einen Formkörper, welcher erhältlich ist durch Aushärten einer wie vorstehend beschriebenen mineralischen Bindemittelzusammensetzung, insbesondere von HPC, UHPC oder SCC enthaltend mindestens ein erfindungsgemässes Copolymer, nach Zugabe von Wasser.

Im Folgenden wird die Erfindung durch Beispiele näher erläutert. Die Beispiele dienen jedoch nur der Veranschaulichung und sind nicht als Einschränkung des Umfangs der Erfindung anzusehen.

### BEISPIELE

### Beispiel 1 - Herstellung der verwendeten Copolymeren

### Herstellung von C-1

Schritt 1: In einem mit N₂-Gas inertisierten Reaktor werden 4 g (0.074 mol) Natriummethylat in 576 g (8 mol) Methallylalkohol gelöst und auf 100°C geheizt. Danach werden während 5 Stunden 1760 g (40 mol) Ethylenoxid zudosiert. Dabei wird die Temperatur bei 100 bis 140°C und der Druck bei 1 bis 3 bar gehalten. Nach Beendigung der Dosierung wird das Reaktionsgemisch 2 Stunden bei 140°C gerührt. Anschliessend wird das Gemisch auf 30°C gekühlt.
Schritt 2: In einem mit N₂-Gas inertisierten Reaktor werden 123 g (0.42 mol) des Gemisches aus Schritt 1) mit 0.54 g (0.01 mol) Natriummethylat versetzt und auf 130°C erhitzt. Danach werden während 30 Minuten 93 g (1.26 mol) Glycidol zudosiert. Dabei werden die Temperatur bei 130 bis 140°C und der Druck bei 1 bis 3 bar gehalten. Nach Beendigung der Dosierung wird das Reaktionsgemisch 2 Stunden bei 140°C gerührt. Man lässt auf 50 °C abkühlen.
Schritt 3: Nach dem Abkühlen auf 50°C werden zu dem Gemisch aus Schritt 2) 2.2 g (0.04 mol) Natriummethylat zugegeben. Der Reaktor wird erneut mit N₂-Gas inertisiert und auf 130°C geheizt. Danach werden während 4 Stunden 628 g (14.27 mol) Ethylenoxid zudosiert. Dabei werden die Temperatur bei 130 bis 140°C und der Druck bei 0 bis 3 bar gehalten. Nach Beendigung der Dosierung wird das Reaktionsgemisch 3 Stunden bei 140°C gerührt. Anschliessend wird das Gemisch auf 50°C gekühlt und mit 3.2 g (0.054 mol) Essigsäure neutralisiert. Die erhaltene Mischung ist das erfindungsgemässe Copolymer C-1.

### Herstellung von C-2

Die Herstellung von C-2 erfolgt analog zu der Herstellung von C-1. Allerdings werden zur Herstellung von C-2 in Schritt 3) 2513 g Ethylenoxid (57 mol) zudosiert.

### Herstellung von C-4

Die Herstellung von C-4 erfolgt analog zu der Herstellung von C-1. Allerdings werden in Schritt 1) 256 g Methanol (8 mol) anstelle von Methallylalkohol eingesetzt.

### Herstellung von C-5

Die Herstellung von C-5 erfolgt analog zu der Herstellung von C-4. Allerdings werden zur Herstellung von C-5 in Schritt 3) 2513 g Ethylenoxid (57 mol) zudosiert.

### Herstellung von C-6

Die Herstellung von C-6 erfolgt analog zu der Herstellung von C-5. Allerdings werden zur Herstellung von C-6 in Schritt 2) 186 g (2.51 mol) Glycidol zudosiert.

Die nachfolgende Tabelle 1 gibt eine Übersicht der als Zusatzmittel verwendeten PCE und Copolymere

**Tabelle 1: Übersicht der als Zusatzmittel verwendeten PCE und Copolymere**

| | |
|---|---|
| R-1 | Wässrige Lösung eines PCE (55% Trockengehalt) aus Acrylsäure (3.6 mol) und ethoxyliertem Methyallylalkohol (Mw = 2'400 g/mol; 1 mol) |
| R-2 | Wässrige Lösung eines PCE (30% Trockengehalt) aus Polyacrylsäure (Mw = 5'000 g/mol), verestert mit einer Mischung zweier Methylpolyethylenglykole (Mw = 1'000 g/mol bzw. 3'000 g/mol, molares Verhältnis 1.3:1) in einem molaren Verhältnis von Säure zu Ester von 1.9:1 |
| R-3 | ViscoCrete 1100 NT (erhältlich von Sika AG) |
| C-1 | Copolymer hergestellt durch aufeinanderfolgende Umsetzung von Methallylakohol mit |
| | 1) 5 Äquivalenten Ethylenoxid |
| | 2) 3 Äquivalenten Glycidol |
| | 3) 34 Äquivalenten Ethylenoxid |
| C-2 | Copolymer hergestellt durch aufeinanderfolgende Umsetzung von Methallylakohol mit |
| | 1) 5 Äquivalenten Ethylenoxid |
| | 2) 3 Äquivalenten Glycidol |
| | 3) 136 Äquivalenten Ethylenoxid |
| C-4 | Copolymer hergestellt durch aufeinanderfolgende Umsetzung von Methanol mit |
| | 1) 5 Äquivalenten Ethylenoxid |
| | 2) 3 Äquivalenten Glycidol |
| | 3) 34 Äquivalenten Ethylenoxid |
| C-5 | Copolymer hergestellt durch aufeinanderfolgende Umsetzung von Methanol mit |
| | 1) 5 Äquivalenten Ethylenoxid |
| | 2) 3 Äquivalenten Glycidol |
| | 3) 136 Äquivalenten Ethylenoxid |
| C-6 | Copolymer hergestellt durch aufeinanderfolgende Umsetzung von Methanol mit |
| | 1) 5 Äquivalenten Ethylenoxid |
| | 2) 6 Äquivalenten Glycidol |
| | 3) 136 Äquivalenten Ethylenoxid |

### Beispiel 2 - Pastenprüfungen

Es wurde eine Trockenmischung hergestellt bestehend aus 150 g Zement (CEM I 42.5 N von Vigier Holding AG), 5.8 g Mikrosilika (SikaFume® -HR/-TU, erhältlich von Sika Schweiz AG), 69.2 g Hochofenschlacke (Regen GGBS von Hanson UK) und 41.5 g Kalkstein (Nekafill 15 von Kalkfabrik Netstal AG). Zur Herstellung der Trockenmischung wurden die Bestandteile in einem Hobartmischer trocken für 30 Sekunden vermischt. Zu dieser Trockenmischung wurden die in Tabelle 2 angegebenen Zusatzmittel, jeweils gelöst in 60 g Wasser gegeben. Es wurde für 30 Sekunden auf Stufe 1 weitergemischt, abschliessend wurde für 3.5 Minuten auf Stufe 2 weitergemischt.

An den erhaltenen Zementpasten wurden Auslaufzeiten gemäss DIN EN 12350-9 und Ausbreitmass gemäss DIN EN 12350-5 gemessen. Gemessen wurde jeweils die Zeit, nach der 210 g der jeweiligen Mischung V1, E1, E2 bzw. E3 vollständig ausgelaufen waren. Die folgende Tabelle 2 gibt einen Überblick über die Ergebnisse.

**Tabelle 2: Ergebnisse der Pastenprüfungen**

| **Versuch** | **Zusatzmittel*** | **Auslaufzeit [s]** | **Ausbreitmass [mm]** |
|---|---|---|---|
| V1 | 3% R-1 | 215 | 165 |
| E1 | 3% R-1 + 1% C-4 | 180 | 163 |
| E2 | 3% R-1 + 3% C-4 | 150 | 165 |
| E3 | 3% R-1 + 1% C-6 | 150 | 164 |

| | | | |
|---|---|---|---|
| * Dosierung in Gew.-% relativ zum Trockengewicht des Zementes | | | |

Aus Tabelle 2 wird deutlich, dass die Verwendung erfindungsgemässer Copolymere in den Versuchen E1 - E3 zu einer Verringerung der Auslaufzeit führen, was einer verbesserten Fliessfähigkeit, bzw. einer verringerten Viskosität entspricht. Verglichen wird hier mit einer nicht erfindungsgemässen Referenz V1, welche nur PCE und kein erfindungsgemässes Copolymer enthält. Darüber hinaus wird aus Tabelle 2 deutlich, dass die erfindungsgemässen Copolymere keine zusätzliche Verflüssigung bewirken, also keine Reduktion des Wasseranspruches bewirken.

### Beispiel 3 - Mörtelprüfungen

Es wurde eine Trockenmischung hergestellt bestehend aus 735 g Zement (CEM I 42.5 N von Vigier Holding AG), 28 g Mikrosilika (SikaFume® -HR/-TU, erhältlich von Sika Schweiz AG), 340 g Hochofenschlacke (Regen GGBS von Hanson UK), 203 g Kalkstein (Nekafill 15 von Kalkfabrik Netstal AG) und 2845g Aggregate mit einer Partikelgrösse von 0 - 8 mm. Zur Herstellung der Trockenmischung wurden die Bestandteile in einem Hobartmischer trocken für 30 Sekunden vermischt. Zu dieser Trockenmischung wurden die in Tabelle 3 angegebenen Zusatzmittel, jeweils gelöst in der in Tabelle 3 angegebenen Menge Wasser zugegeben. Es wurde für 30 Sekunden auf Stufe 1 weitergemischt, abschliessend wurde für 3.5 Minuten auf Stufe 2 weitergemischt.

An den erhaltenen Mörtel wurden das Ausbreitmass gemäss DIN EN 12350-5 direkt nach dem Mischen (0 Minuten) und nach einer Zeit von 30 Minuten gemessen. Ausserdem wurde die Trichterauslaufzeit gemäss DIN EN 12350-9 gemessen. Die folgende Tabelle 3 gibt einen Überblick über die Ergebnisse.

**Tabelle 3: Ergebnisse der Mörtelprüfungen**

| **Versuch** | **Zusatzmittel*** | **Wasser [g]** | **Ausbreitmass [mm]** | | **Trichterauslaufzeit [s]** |
|---|---|---|---|---|---|
| | | | **0'** | **30'** | |
| V2 | 3% R-2 | 250 | 264 | 249 | 310 |
| E4 | 3% R-2 | 250 | 272 | 256 | 80 |
| | 1% C-4 | | | | |
| E5 | 3% R-2 | 250 | 268 | 261 | 104 |
| | 3% C-4 | | | | |
| E6 | 3% R-2 | 247 | 263 | 247 | 236 |
| | 0.5% C-4 | | | | |
| E7 | 3% R-2 | 247 | 265 | 253 | 300 |
| | 0.5% C-5 | | | | |
| E8 | 3% R-2 | 247 | 262 | 242 | 240 |
| | 0.5% C-6 | | | | |
| E9 | 3% R-2 | 244 | 267 | 254 | 181 |
| | 1% C-4 | | | | |
| E10 | 3% R-2 | 244 | 250 | 269 | n.m. |
| | 1% C-5 | | | | |
| E11 | 3% R-2 | 244 | 263 | 253 | 243 |
| | 1% C-6 | | | | |
| E12 | 3% R-2 | 232 | 263 | 244 | 210 |
| | 3% C-4 | | | | |

| | | | | | |
|---|---|---|---|---|---|
| * Dosierung in Gew.-% relativ zum Trockengewicht des Zementes n.m.: nicht gemessen | | | | | |

Die erfindungsgemässen Versuche E4 und E5 zeigen im Vergleich zu dem nicht erfindungsgemässen Versuch V2 eine deutlich verringerte Auslaufzeit aus dem V Trichter. Dies entspricht einer verbesserten Fliessfähigkeit, bzw. einer verringerten Viskosität. Die erfindungsgemässen Versuche E6 - E11 zeigen, dass eine verbesserte Fliessfähigkeit, bzw. eine verringerte Viskosität auch erreicht werden kann, wenn die Wassermenge reduziert wird.

Die Ergebnisse der Tabelle 3 zeigen auch, dass die Verwendung erfindungsgemässer Copolymere nur geringen Einfluss auf das Ausbreitmass hat und damit die Fliessgrenze von mineralischen Bindemittelzusammensetzungen nur wenig verändert.

### Beispiel 4 - Betonprüfungen

Es wurde eine Trockenmischung hergestellt bestehend aus 340 g Zement (CEM I 42.5 N von Vigier Holding AG), 851 g Quartzsand und 951 g Kies. Zur Herstellung der Trockenmischung wurden die Bestandteile in einem Hobartmischer trocken für 30 Sekunden vermischt. Zu dieser Trockenmischung wurden die in Tabelle 4 angegebenen Zusatzmittel, jeweils gelöst in 170 g Wasser, zugegeben. Es wurde für 30 Sekunden auf Stufe 1 weitergemischt, abschliessend wurde für 3.5 Minuten auf Stufe 2 weitergemischt.

An den erhaltenen Betonen wurden das Setzmass gemäss JIS A1150 sowie die Fliessgeschwindigkeit gemäss JSCE-F-514 gemessen. Die folgende Tabelle 4 gibt einen Überblick über die Ergebnisse.

**Tabelle 4: Ergebnisse der Betonprüfungen**

| **Versuch** | **Zusatzmittel*** | **Setzmass [mm]** | **Fliessgeschwindigkeit [cm/s]** |
|---|---|---|---|
| V4 | 1.1% R-3 | 235 | 28.0 |
| E13 | 0.95% R-3 | 240 | 40.8 |
| | 0.5% C-1 | | |
| E14 | 0.95% R-3 | 235 | 34.5 |
| | 0.5% C-2 | | |

| | | | |
|---|---|---|---|
| * Dosierung in Gew.-% relativ zum Trockengewicht des Zementes | | | |

Aus einem Vergleich der erfindungsgemässen Versuche E13 und E14 mit dem nicht erfindungsgemässen Versuch V4 wird deutlich, dass durch die erfindungsgemässe Verwendung von Copolymeren die Fliessgeschwindigkeit deutlich gesteigert werden kann, was einer Verringerung der Viskosität entspricht.

### Beispiel 5 - Mörtelprüfungen

Die Trockenmischung aus Beispiel 4 wurde durch ein Sieb mit einer Maschenweite von 5 mm gegeben. Zu der resultierenden Trockenmischung wurden die in Tabelle 5 angegebenen Zusatzmittel, jeweils gelöst in 170 g Wasser, zugegeben. Es wurde auf einem Hobart-Mischer für 30 Sekunden auf Stufe 1 gemischt, abschliessend wurde für 3.5 Minuten auf Stufe 2 weitergemischt.

An den entstandenen Mörtelmischungen wurden das Ausbreitmass gemäss JIS A1150 sowie eine Ablaufzeit gemäss JSCE-F 541-1999 bestimmt. Die folgende Tabelle 5 gibt einen Überblick über die Ergebnisse.

**Tabelle 5: Ergebnisse der Mörtelprüfungen**

| **Versuch** | **Zusatzmittel*** | **Ausbreitmass [mm]** | **Ablaufzeit [s]** |
|---|---|---|---|
| V5 | 1.1% R-3 | 100 | 47.7 |
| E15 | 0.95% R-3 | 103 | 24.3 |
| | 0.5% C-1 | | |
| E16 | 0.95% R-3 | 105 | 27.1 |
| | 0.5% C-2 | | |

| | | | |
|---|---|---|---|
| * Dosierung in Gew.-% relativ zum Trockengewicht des Zementes | | | |

Aus einem Vergleich der erfindungsgemässen Versuche E15 und E16 mit dem nicht erfindungsgemässen Versuch V5 wird deutlich, dass durch die erfindungsgemässe Verwendung von Copolymeren die Abflusszeit deutlich verringert werden kann, was einer Verringerung der Viskosität entspricht.

## Patentansprüche

1. Verwendung von Copolymeren als Zusatzmittel zur Erhöhung der Fliessgeschwindigkeit und/oder zur Reduktion der Viskosität von mineralischen Bindemittelzusammensetzungen, wobei die Copolymere hergestellt werden in einem mehrstufigen Verfahren, umfassend die Schritte
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ = C1 - C18 Alkyl, C2 - C18 Alkylen, C3 - C10 Cycloalkyl, C6 - C30 Aryl, C7 - C30 Aralkyl oder C1-C18 Carbonyl, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel.

2. Verwendung von Copolymeren gemäss Anspruch 1, **dadurch gekennzeichnet, dass** die Copolymere Copolymere der allgemeinen Struktur (I) sind 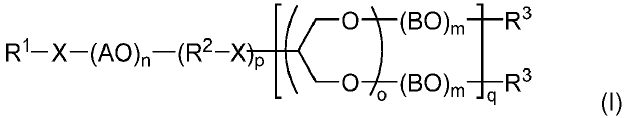 wobei
R¹ = C1-C18 Alkyl, C2-C18 Alkylen, C3-C10 Cycloalkyl, C6-C30 Aryl oder C7-C30 Aralkyl oder C1-C18 Carbonyl, bevorzugt Methyl, Ethyl, Vinyl, Allyl, Methallyl, Isoprenyl, Cyclohexyl, Phenyl, Acryloyl oder Methacryloyl ist,
X = O oder NH ist,
A jeweils unabhängig voneinander C1-C10 Alkylen, bevorzugt Ethylen, Propylen und/oder Butylen sind,
R² = C1-C16 Alkyl ist,
B jeweils unabhängig voneinander C1-C10 Alkylen, bevorzugt Ethylen, Propylen und/oder Butylen sind,
R³ = H, C1-C16 Alkyl, oder C(O)R¹, mit R¹ wie oben definiert, bevorzugt H ist,
m jeweils unabhängig voneinander eine ganze Zahl im Bereich von 0 - 350 sind,
n eine ganze Zahl im Bereich von 0 - 100 ist,
p gleich 0 oder 1 ist,
q eine ganze Zahl im Bereich von 1 - 10 ist, und
falls q = 1 ist, o eine ganze Zahl im Bereich von 1 - 10 ist, und falls q > 1 ist, alle o jeweils unabhängig voneinander eine ganze Zahl im Bereich von 1 - 50 darstellen.

3. Verwendung von Copolymeren gemäss Anspruch 1, **dadurch gekennzeichnet, dass** die Copolymere Copolymere der allgemeinen Strukturen (II), (III), oder (V) sind 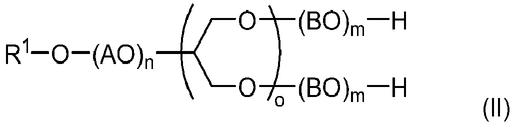 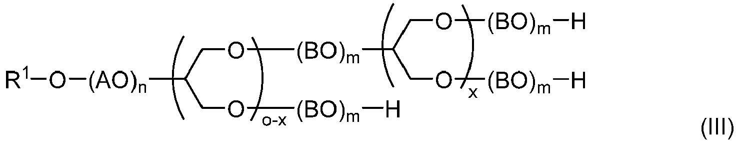 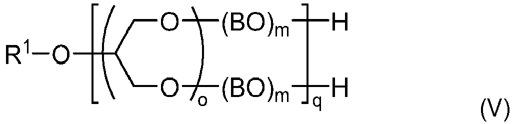 wobei
R¹ ausgewählt ist aus C1-C18 Alkyl, besonders bevorzugt aus Methyl oder Ethyl,
A jeweils unabhängig voneinander Ethylen, Propylen und/oder Butylen, besonders bevorzugt Ethylen sind,
B jeweils unabhängig voneinander Ethylen, Propylen und/oder Butylen, besonders bevorzugt Ethylen sind,
m jeweils unabhängig voneinander eine ganze Zahl im Bereich 0 - 350, besonders bevorzugt 2 - 200, ganz besonders bevorzugt 5 - 150, im Speziellen 7 - 30 sind,
n eine ganze Zahl im Bereich von 1 - 100, besonders bevorzugt 2 - 75, ganz besonders bevorzugt 5 - 55 ist,
o jeweils unabhängig voneinander eine ganze Zahl im Bereich von 1 - 50, besonders bevorzugt 3 - 40, ganz besonders bevorzugt 6 - 30, im Speziellen 8 - 20 ist,
q eine ganze Zahl im Bereich von 1 - 10 ist, und
x eine ganze Zahl im Bereich von 1 - 9 ist, mit der Massgabe, dass x < o.

4. Verwendung von Copolymeren gemäss einem der vorhergehenden Ansprüche, **dadurch gekennzeichnet, dass** die mittleren Molmasse Mw der Copolymere im Bereich von 200 - 75'000, bevorzugt 500 - 50'000, besonders bevorzugt 1'000 - 35'000, ganz besonders bevorzugt 1'500 - 25'000, insbesondere 2'000 - 15'000 liegt.

5. Verwendung von Copolymeren gemäss einem der vorhergehenden Ansprüche, **dadurch gekennzeichnet, dass** R¹ eine C1-C18 Alkyl-Einheit, bevorzugt eine Methyl- oder Ethyl-Einheit ist.

6. Verwendung gemäss einem der vorhergehenden Ansprüche, **dadurch gekennzeichnet, dass** die mineralische Bindemittelzusammensetzung mindestens ein hydraulisches Bindemittel, bevorzugt Zement, in wenigstens 5 Gew.-%, bevorzugt in wenigstens 20 Gew.-%, besonders bevorzugt in wenigstens 35 Gew.-%, ganz besonders bevorzugt in wenigstens 65 Gew.-%, im Speziellen ≥ 95 Gew.-%, jeweils bezogen auf die Trockenmasse der mineralischen Bindemittelzusammensetzung, umfasst.

7. Verwendung gemäss einem der vorhergehenden Ansprüche, **dadurch gekennzeichnet, dass** das Copolymere in einer Menge von 0.01 - 10 Gew.-%, bevorzugt 0.1 - 7 Gew.-%, besonders bevorzugt 0.2 - 5 Gew.-%, jeweils bezogen auf das Gesamtgewicht an mineralischem Bindemittel, vorhanden ist.

8. Verwendung gemäss einem der vorhergehenden Ansprüche, **dadurch gekennzeichnet, dass** die mineralische Bindemittelzusammensetzung Wasser in einer Menge umfasst, dass ein Verhältnis von Wasser zu mineralischem Bindemittel im Bereich von 0.18 - 0.6, bevorzugt 0.2 - 0.5, besonders bevorzugt 0.22 - 0.4, insbesondere 0.22 - 0.37, im Speziellen 0.22 - 0.28 oder 0.32 - 0.37 resultiert.

9. Verwendung gemäss einem der vorhergehenden Ansprüche, **dadurch gekennzeichnet, dass** die mineralische Bindemittelzusammensetzung ein hochfester Beton, ultrahochfester Beton oder selbstverdichtender Beton ist.

10. Verwendung gemäss einem der vorhergehenden Ansprüche, **dadurch gekennzeichnet, dass** die mineralische Bindemittelzusammensetzung mindestens einen Superverflüssiger ausgewählt aus der Gruppe der Lignosulphonate, Polynaphthalinsulfonate, Polymelaminsulfonate und/oder Polycarboxylatether umfasst.

11. Zusatzmittel für mineralische Bindemittelzusammensetzungen, umfassend mindestens ein Copolymer hergestellt in einem mehrstufigen Verfahren, umfassend die Schritte
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ = C1 - C18 Alkyl, C2 - C18 Alkylen, C3 - C10 Cycloalkyl, C6 - C30 Aryl, C7 - C30 Aralkyl oder C1-C18 Carbonyl, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel.

12. Zusatzmittel gemäss Anspruch 11, **dadurch gekennzeichnet, dass** das Zusatzmittel zusätzlich mindestens einen Polycarboxylatether umfasst wobei das Verhältnis von Copolymer zu Polycarboxylatether im Bereich zwischen 0.05:5 - 1:1, bevorzugt 0.1:3 - 1:1, besonders bevorzugt 0.1:3 - 1:3 liegt.

13. Verfahren zur Kontrolle der Rheologie von mineralischen Bindemittelzusammensetzungen, **dadurch gekennzeichnet dass** ein Zusatzmittel gemäss Anspruch 11 und/oder Anspruch 12 der Trockenmischung der mineralischen Bindemittelzusammensetzung beigegeben wird und/oder zusammen mit dem Anmachwasser zugegeben wird und/oder kurz nach Zugabe des Anmachwassers zugegeben wird.

14. Mineralische Bindemittelzusammensetzung enthaltend mindestens ein mineralisches Bindemittel sowie mindestens ein Copolymer hergestellt in einem mehrstufigen Verfahren, umfassend die Schritte
1) optional Umsetzung eines Starters **S,** ausgewählt aus der Gruppe bestehend aus Alkoholen, Aminen, Carbonsäuren oder Amiden der allgemeinen Formel R¹-XH, mit einem Alkoxylierungsmittel und/oder einem halogenierten Alkohol oder halogenierten Amin Hal-R²-XH, wobei R¹ = C1 - C18 Alkyl, C2 - C18 Alkylen, C3 - C10 Cycloalkyl, C6 - C30 Aryl, C7 - C30 Aralkyl oder C1-C18 Carbonyl, X = O oder NH, Hal = Cl, Br oder I, und R² = C1 - C16 Alkyl ist,
2) Umsetzung eines Startes **S** oder des Reaktionsproduktes aus Schritt 1) mit Glycidol oder Epichlorhydrin oder einer Mischung aus Glycidol und einem Alkoxylierungsmittel oder einer Mischung aus Epichlorhydrin und einem Alkoxylierungsmittel,
3) optional Umsetzung des Reaktionsproduktes aus Schritt 2) mit einem Alkoxylierungsmittel.

15. Formkörper, erhältlich durch Aushärten einer mineralischen Bindemittelzusammensetzung gemäss Anspruch 14 nach Zugabe von Wasser
